# EUROPEAN PATENT SPECIFICATION

(11) **EP 3 727 000 B1**
(45) Date of publication and mention of the grant of the patent: **16.04.2025**
(21) Application number: 18893003.6
(22) Date of filing: 17.12.2018
(51) Int. Cl.: A23B 7/01, A23B 7/00, A23B 7/005, A23G 3/48, A23G 4/06, A23G 4/02

(54) **A METHOD OF PREPARING A CHEWING GUM OR CONFECTIONERY PRODUCT**
VERFAHREN ZUR HERSTELLUNG EINES KAUGUMMI ODER SÜSSWARENPRODUKTS
PROCÉDÉ DE PRÉPARATION D'UN CHEWING-GUM OU D'UN PRODUIT DE CONFISERIE

(30) Priority: 18.12.2017 US 201762607030 P
(43) Date of publication of application: 28.10.2020
(73) Proprietor: Wm. Wrigley Jr. Company, Chicago, IL 60642 (US)
(72) Inventor: UNLU, Emine, Chicago, Illinois 60642 (US); VISWANATHAN, Thiruvenkadam, Chicago, Illinois 60642 (US)
(74) Representative: Greaves Brewster LLP
(86) International application number: PCT/US2018/065927
(87) International publication number: WO 2019/125992

(56) References cited:
- WO-A1-2017/095774
- WO-A2-2013/074762
- US-A- 5 135 122
- US-A- 5 135 122
- US-A1- 2006 034 981

## Description

### BACKGROUND OF THE INVENTION

The present invention relates to a method of preparing a chewing gum or confectionery product, the chewing gums and confections having inclusions of pieces of plant material such as pieces of mint leaves or dried fruit, wherein the plant material is stabilized against microbial grown by treatment with infrared radiation.

WO 2017/095774 A1 discloses a method of preparing a chewing gum or confectionery product (pressed mints) comprising pieces of plant material, such as mint or fruit comprising the step of preparing plant material pieces of a desired size, irradiating the fresh plant pieces, for microbial safety and shelf life, preparing a chewing gum or confectionery product and incorporating the irradiated plant material onto the surface of the chewing gum or confectionery product. Chewing gums and confections are enjoyed by millions of consumers for their flavor and breath-freshening properties, among other benefits. Many chewing gum consumers seek products that provide a novel appearance or sensory experience. Examples of products designed to appeal to these consumers include those with edible ink printing, those containing colored particles which may or may not provide flavor and/or textural sensations and those having a second chewing gum of a contrasting color coextruded with or surface applied to a first chewing gum composition. Many confectionery products may be treated similarly.

Many consumers are also seeking food products of all sorts which contain more natural ingredients and/or provide a more sophisticated or "gourmet" perception. In an effort to provide more natural and more sophisticated products, confectioners and gum makers may add pieces of plant material such as leaves and fruit pieces to the product. In order to preserve the appearance, flavor and safety of the product, it is necessary to treat these plant materials to make them microbiologically stable.

Past efforts at producing microbiologically stable plant materials such as herbs and tea leaves have relied on freeze drying. While freeze dried plant materials are microbiologically stable on the shelf, they may not be so when incorporated into a confectionery product or chewing gum which contains a small amount of water. Furthermore, the dried plant material is typically brittle and easily broken up when subjected to processing such as mixing and rolling. This results in the plant material being reduced to a powder rather than the small pieces which are preferred.

The present invention provides chewing gum and confections such as pressed mint products having a distinctive, attractive appearance as well as unique flavor and texture features provided by pieces of plant material included on or in the product.

### SUMMARY OF THE INVENTION

The present invention is directed to a method of preparing chewing gums and confectionery products which include plant materials such as pieces of leaves and fruit. In some embodiments, the chewing gum or confectionery piece will have the plant material inclusions distributed on at least one side surface of which a major portion of the area is partially or substantially covered one or more pieces of plant material. In some embodiments, the plant material inclusions are mixed onto the body of the product and thereby distributed throughout the mass and typically visible on any exposed surfaces.

In the present invention, the plant material is treated with infrared radiation prior to incorporation into the confectionery or chewing gum product to render it microbiologically stable.

In treating the plant material, it is important that the treatment not be excessive or insufficient. The anti-microbial treatment is excessive if the flavor or appearance of the plant material is adversely affected or affected more than is necessary to make the material microbiologically stable. The anti-microbial treatment is insufficient if unacceptable microbial growth occurs on the plant material or in the finished product. In methods of the present invention, the pieces of plant material are subjected to IR radiation for a time and at an intensity sufficient to render mold, fungus and bacteria incapable of growth while not significantly impacting the sensory benefits conveyed by the plant material. After treatment, the plant material is suitable for incorporation into the confectionery mass or attachment to the surface of the product.

### DESCRIPTION OF THE INVENTION

The present invention is defined in the appended claims.

The present invention discloses amethod of preparing a chewing gum or confectionery product comprising pieces of plant material comprising the steps of:
preparing fresh or dried plant material pieces of a desired size, wherein the plant material is a leaf,
irradiating the fresh or dried plant pieces with infrared radiation for a time and intensity sufficient to render it microbiologically stable while substantially preserving the color and flavor of the plant material,
wherein the temperature of the irradiated plant material immediately after irradiation is 138°C (280°F) or less, wherein when the plant material is fresh plant material, the time of irradiation is at least 20 minutes, and when the plant material is dried plant material, the time of irradiation is no more than 180 seconds,
preparing a chewing gum or confectionery product,
incorporating the irradiated plant material into the mass, or onto the surface, of the chewing gum or confectionery product.

The present invention is a method of preparing chewing gum or confection which comprises small pieces of plant material which have been treated with infrared radiation to produce a natural, microbiologically stable ingredient.

By microbiologically stable, it is meant that any bacteria, yeast or mold on the material is killed or weakened or reduced in number to the extent that growth is prevented (at least to an acceptable degree) after the material is incorporated into the finished product.

By small pieces of plant material, it is meant leaves, fruit or other edible portions of edible plants which have a size suitable for inclusion in candies and chewing gum. In most cases, this will be pieces that have been comminuted to have dimensions on the order of less than 1 mm or less than 2 mm or less than 3mm or less than 5 mm. In some cases, the pieces may have up to two larger dimensions as long as the third dimension is sufficiently small, such as an intact mint leaf.

Infrared (IR) radiation refers to radiant electromagnetic energy at lower frequencies (longer wavelength) than visible light. IR radiation is converted to heat when it strikes an opaque object, thus warming the object in the process.

In some embodiments, the plant material will be a leaf such as a mint leaf such as peppermint, spearmint or other edible members of the Labiatae (mint) family such as basil, rosemary, sage or oregano as well as non-mint herbs.

In some embodiments, the plant material will be a piece of fruit such as sliced or comminuted strawberry, apple, blueberry, pear, peach, kiwi, pineapple, banana, cucumber or tomato.

In addition other types of plant material such as sliced or comminuted nuts are included in the scope of the present invention.

It is necessary to microbiologically stabilize the plant material to ensure food safety and shelf life. In the present invention, this is accomplished by exposing the material to infrared radiation. In order to preserve the color and other sensory properties of the product, it is important that the plant material be dried under a low IR output for an extended period of time.

Different types of IR emission apparatus will have different control systems making it difficult to specify settings which would apply to all such systems. Therefore it is most appropriate to express the exposure in terms of time and final product temperature. For example, for fresh (undried) plant material, exposure periods of at least 20 minutes or at least 30 minutes or at least 40 minutes or at least 50 minutes or at least 60 minutes are appropriate. In some embodiments, final product temperature will be no higher than 60° C ( 140°F) or no higher than 54.44° C (130°F) or no higher than 48.88° C ( 120°F ) or no higher than 43.33° C (110°F) or no higher than 37.77° C (100°F) may be appropriate. Of course, it is also important that the treatment be sufficient to kill or weaken a sufficient percentage of bacteria and mold spores in the plant material to render it microbiologically stable. In some embodiments, this will require irradiating the material until it reaches a temperature of at least 37.77° C (100°F) or at least 43.33° C (110°F) or at least 48.88° C ( 120°F.).

In some embodiments, the plant material may be dried by other means such as air drying or freeze drying prior to IR irradiation. In such cases, the exposure to IR radiation can be greatly reduced. Due to the absence of moisture in the plant material, higher product temperatures will typically be seen even though the exposure time is much shorter. In some embodiments, dried plant material may be exposed to IR radiation for no more than 180 seconds, or no more than 150 seconds or no more than 120 seconds or no more than 90 seconds or no more than 60 seconds or no more than 30 seconds. The temperature of the plant material after irradiation will be no higher than 280°F (138°C) or no higher than 250°F (121°C) or no higher than 220°F (104°C) or no higher than 200°F (93°C).

The fundamental components of a chewing gum typically are a water-insoluble gum base portion and a water-soluble bulking agent portion. The primary component of the gum base is an elastomeric polymer which provides the characteristic chewy texture of the product. The gum base will typically include other ingredients which modify the chewing properties or aid in processing the product. These include plasticizers, softeners, fillers, emulsifiers, plastic resins, as well as colorants and antioxidants. The water soluble portion of the chewing gum typically includes a bulking agent together with minor amounts of secondary components such as flavors, high-intensity sweeteners, colorants, water-soluble softeners, gum emulsifiers, acidulants and sensates. Typically, the water-soluble portion, sensates, and flavors dissipate during chewing and the gum base is retained in the mouth throughout the chew.

Any suitable chewing gum base and chewing gum formula may be used to produce a shell for center-filled chewing gums of the present invention. By suitable it is meant that the formula is capable of being processed through the selected equipment.

The insoluble gum base typically may contain any combination of elastomers, vinyl polymers, elastomer plasticizers, fillers, softeners, waxes and other optional ingredients such as colorants and antioxidants. The variety of gum base ingredients typically used provide the ability to modify the chewing characteristics of gums made from the gum base.

Elastomers provide the rubbery, cohesive nature to the gum which varies depending on this ingredient's chemical structure and how it may be compounded with other ingredients. Natural elastomers may include natural rubber such as smoked or liquid latex and guayule, natural gums such as jelutong, lechi caspi perillo, massaranduba balata, massaranduba chocolate, nispero, rosidinha, chicle, gutta percha, gutta kataiu, niger gutta, tenu, chilte, chiquibul, gutta hang kang. Synthetic elastomers may include high molecular weight elastomers such as butadiene-styrene copolymers and isobutylene-isoprene copolymers. Other polymers which sometimes serve as elastomers include polybutadiene and polyisobutylene, vinyl polymers such as polyvinyl acetate, polyethylene, vinyl copolymeric elastomers such as vinyl acetate/vinyl laurate, vinyl acetate/vinyl stearate, ethylene/vinyl acetate, polyvinyl alcohol or mixtures thereof. These polymers perform best when used in combination with butadiene-styrene copolymers and isobutylene-isoprene copolymers.

Vinyl polymeric and copolymeric type elastomers provide tack resistance, vary the chew characteristics of gums made from these bases and offer hydrophilic properties beneficial to sensory perception of the final gums. For copolymeric types, the amount of vinyl laurate, vinyl stearate, or ethylene present in the vinyl laurate/vinyl acetate (VLNA), vinyl stearate/vinyl acetate (VSNA), or ethylene/vinyl acetate (EVA) copolymers respectively typically ranges from about 10 to about 60 percent by weight of the copolymer. Average molecular weights of these polymers may range from about 2,000 to about 80,000. Ball and ring softening points of these polymers may range from about to 50 to 120°C. Polyvinyl acetate having an average molecular weight from about 8,000 to about 52,000 are preferred for use in the gum base and gum of the present invention. More preferred for chewing gum bases are those of from about 10,000 to about 35,000 molecular weight, and for bubble gum bases, those having from about 30,000 to about 60,000 molecular weight. Vinyl polymers typically release flavor quickly, and using iso-alkanic waxes exhibiting small crystalline structure with these vinyl polymers extends flavor release.

Petroleum waxes aid in the curing of the finished gum made from the gum base as well as improve shelf-life and texture. Wax crystal size when hard also improves the release of flavor. Those waxes high in iso-alkanes have a smaller crystal size than those waxes high in normal-alkanes, especially those with normal-alkanes of carbon numbers less than 30. The smaller crystal size allows slower release of flavor since there is more hindrance of the flavor's escape from this wax versus a wax having larger crystal sizes.

Synthetic waxes are produced by means atypical of petroleum wax production. The synthetic waxes may include waxes containing branched alkanes and copolymerized with monomers such as, but not limited to, propylene and polyethylene and Fischer-Tropsch type waxes. Polyethylene wax is not in the same category as polyethylene, a polymer of ethylene monomers.

Elastomer solvents (sometimes called elastomer plasticizers) vary the firmness of the gum base. Their specificity on elastomer inter-molecular chain breaking (plasticizing) along with their varying softening points cause varying degrees of finished gum firmness when used in base. This is also important when one wishes to provide more elastomeric chain exposure to the alkanic chains of the waxes. Elastomer solvents include natural rosin esters such as glycerol ester of partially hydrogenated rosin, glycerol ester of polymerized rosin, glycerol ester of partially dimerized rosin, glycerol ester of rosin, glycerol ester of tall oil rosin, pentaerythritol esters of partially hydrogenated rosin, partially hydrogenated methyl esters of rosin, pentaerythritol ester of rosin, synthetic elastomer plasticizers such as terpene resins derived from alpha-pinene, beta-pinene and/or d-limonene, and mixtures thereof. The elastomer solvents used may be of one type or of combinations of more than one. Typically, the ratios of one to the other are dependent on each respective softening point, on each effect on flavor release, and on each respective degree of tack they cause to the gum. Ball and ring softening points of the rosin ester types described above may range from about 60 to about 120°C. Softening points of the terpene resins may range from about 60 to about 130°C and an average molecular weight of from about 500 to 2,000. Occasionally, both terpene and rosin ester resins may be used together.

Softeners modify the texture, cause the hydrophobic and hydrophilic components of the base to be miscible, and may further plasticize the synthetic elastomers of the gum base. Softeners include fully hydrogenated oils of cottonseed, soybean, palm, palm kernel, coconut, safflower and the like, as well as monoglycerides, diglycerides, acetylated monoglycerides, distilled mono- and diglycerides and de-oiled or "powdered" lecithin. The glycerides and lecithin are sometimes referred to as emulsifiers.

Fillers used in gum base modify the texture of the gum base and aid in processing. Fillers include carbonate or precipitated carbonated types such as magnesium and calcium carbonate, ground limestone and silicate types such as magnesium and aluminum silicate, clay, alumina, talc, as well as titanium oxide, mono- di- and tri-calcium phosphate, cellulose polymers such as ethyl, methyl and wood or mixtures thereof.

Other optional ingredients such as antioxidants and colorants may also be used in the gum base. Antioxidants prolong shelf-life and storage of gum base, finished gum or their respective components including fats and flavor oils. Antioxidants suitable for use in gum base or gum of the present invention include butyiated hydroxyanisole (BHA), butylated hydroxytoluene (BHT), betacarotenes, tocopherols, acidulants such as Vitamin C, propyl gallate, other synthetic and natural types or mixtures thereof in free-flowing ground or pulverized form.

The soluble portion of chewing gums is composed of flavoring agents (including sensates such as physiological cooling agents, warming agents and tingling agents), bulking agents (also called bulk sweeteners), high intensity sweeteners, colors, acidulants, fillers, emulsifiers, water soluble softening agents and binders.

Bulk sweeteners include both sugars and sugar alcohols. Bulk sweeteners typically constitute about 5% to about 95% by weight of the chewing gum, more typically, about 20% to about 80% by weight, and more commonly, about 30% to about 60% by weight of the gum. Sugar sweeteners generally include saccharide-containing components commonly known in the chewing gum art, including but not limited to, sucrose, dextrose, maltose, dextrin, dried invert sugar, fructose, galactose, corn syrup solids, and the like, alone or in combination. Sugarless sweeteners include, but are not limited to, sugar alcohols such as sorbitol, mannitol, xylitol, hydrogenated starch hydrolysates, maltitol, erythritol, isomalt and the like, alone or in combination.

High-intensity artificial sweeteners can also be used, alone or in combination, with the above. Preferred sweeteners include, but are not limited to, sucralose, aspartame, N-substituted APM derivatives such as neotame, salts of acesulfame, alitame, saccharin and its salts, cyclamic acid and its salts, glycyrrhizin, dihydrochalcones, thaumatin, monellin, stevia and the like, alone or in combination. In order to provide longer lasting sweetness and flavor perception, it may be desirable to encapsulate or otherwise control the release of at least a portion of the artificial sweetener. Such techniques as wet granulation, wax granulation, spray drying, spray chilling, fluid bed coating, coacervation, and fiber extrusion may be used to achieve the desired release characteristics.

Softeners are added to the chewing gum in order to optimize the chewability and mouth feel of the gum. The softeners, which are also known as plasticizers and plasticizing agents, generally constitute between approximately 0.5% to about 15% by weight of the chewing gum. The softeners may include glycerin, lecithin, and combinations thereof. Aqueous sweetener solutions such as those containing sorbitol, hydrogenated starch hydrolysates, corn syrup and combinations thereof, may also be used as softeners and binding agents in chewing gum.

Combinations of sugar and/or sugarless sweeteners may be used in chewing gum. Additionally, the softener may also provide additional sweetness such as with aqueous sugar or alditol solutions.

If a low calorie gum is desired, a low calorie bulking agent can be used. Examples of low calorie bulking agents include: polydextrose; oligofructose (Raftilose); inulin (Raftilin); fructooligosaccharides (NutraFlora); palatinose oligosaccharide; guar gum hydrolysate (BeneFiber); or indigestible dextrin (Fibersol). However, other low calorie bulking agents can be used.

A variety of flavoring agents can also be used, if desired. The flavor can be used in amounts of about 0.1 to about 15 weight percent of the gum, and preferably, about 0.2% to about 5% by weight. Flavoring agents may include essential oils, synthetic flavors or mixtures thereof including, but not limited to, oils derived from plants and fruits such as citrus oils, fruit essences, peppermint oil, spearmint oil, other mint oils, clove oil, oil of wintergreen, anise and the like. Artificial flavoring agents and components may also be used. Natural and artificial flavoring agents may be combined in any sensorially acceptable fashion. Included in the general category of flavors are sensates, chemicals which impart physiological sensations in the mouth such as cooling agents, warming agents and tingling agents. Examples of cooling agents include menthol, WS-23, WS-3, WS-5, isopulegol, esters of menthol such as menthyl succinate, menthyl lactate and menthyl glutarate, among others. Warming and tingling agents include capsaicin, piperine, jambu and spilanthol.

In general, chewing gum is manufactured by sequentially adding the various chewing gum ingredients to a commercially available mixer known in the art. After the ingredients have been thoroughly mixed, the gum mass is discharged from the mixer. In a variation, a mixing extruder may be used to mix the ingredients and discharge the mixed gum in a continuous process. The mass is then typically passed through an extruder and a series of sizing and scoring rollers to produce sheets of chewing gum at the desired thickness and scored to define the finished piece size. In the present invention, the plant material may be added to the mixing apparatus - preferably late in the mixing process to preserve the structure of the plant material. Alternatively, the plant material may be distributed across the sheet prior to introduction to a sizing roller. In surface applied embodiments, it may be necessary to spray the sheet with an edible adhesive such as a sugar, sugar alcohol or syrup solution prior to distributing the plant material on the surface. This improves adherence of the plant material to the gum sheet.

In the case of confections, these are typically composed primarily of a compressible sugar or sugar alcohol composition which can be purchased from sugar and polyol manufacturers. The compressible powder is typically blended with liquid or dried flavoring agents, as well as colors, and other optional ingredients. The blended composition is typically introduced into a tablet press, such as a rotary tablet press and compressed with die forms to produce a hard tablet having a shape determined by the die. In the present invention, the plant material pieces may be introduced during dry-blending of the powder ingredients or during the initial compression or in a subsequent compression step.

### EXAMPLES

The following examples illustrate embodiments of the present invention.

About 20lb (9 kg.) of fresh standard peppermint was purchased from a local farm in Illinois, United States. The mint leaves were separated from their stems manually.

The fresh mint leaves were dried using an infrared catalytic dryer. recirculating air blowing either through the bottom of the test tray or across the top of the product. A total of seven runs using different test conditions were performed.

Example 1: 4 oz (113g) of de-stemmed peppermint leaves were loaded on to a 12x12 inch (approximately 30x30 cm) mesh test tray and subjected to IR drying using two Catalytic Infrared emitters at 700-800°F (370-430°C) (far infrared) above the product. The natural gas valve was set at '2'. The test tray was positioned 12 inches (30 cm) away from the top emitters. Total drying time was 11 minutes under these conditions with a final product temperature of 175°F (79°C). The mint leaves turned dark very quickly and were considered unacceptable because they lost their green color.

Example 2: To reduce the excessive darkening, for the test condition 2; the amount of fresh peppermint leaves in the testing tray was reduced from 4 oz to 2 oz (113g to 57g) and the gas setting was reduced to '1.5' with only one top emitter running. The mint leaves were exposed to IR drying for 30 minutes resulting in a final product temperature of 135°F (57°C). These samples turned very dark by the end of drying too.

Example 3: 2 oz fresh peppermint leaves was put on the meshed sample tray and placed 45.72 cm (18 inches ) away from the emitter and dried for 55 minutes at gas setting of '1.5'. This test condition showed some improvement compared to previous two conditions. However, it was not uniform throughout and it had mixture of dried brownish green leaves along with non-dried green leaves.

Example 4: 3 oz (85g) fresh peppermint leaves were placed on the meshed sample tray and the tray was positioned 45.72 cm (18 inches ) from the top one IR emitter and dried for 2 hours and 45 minutes at natural gas setting of '1.5'. Final product temperature was 109°F (43°C)and dried samples looked very promising with little darkening.

Examples 5 - 7 were conducted similarly using conditions specified in Table 1.

Average mint oil content of test samples were determined using an internal propriteray method based on reference dl-Limonene / Eucalyptol, Menthone and Menthol contents and relative ratios of these reference components in the test samples (Table 1). Levels of flavor components are expressed as percent of dried leaves.

The sample quantities created in these tests were insufficient to conduct microbiological analyses.

**Table 1. Mint oil contents of Infrared dried, whole, standard fresh peppermint leaves with stems manually removed (Smitt's Farm sourced)**

| **Ex. #** | **Samples / IR Treatment Conditions** | **dl-limonene/ Eucalyptol (%)** | **Menthone (%)** | **Menthol (%)** | **Average Mint Oil Content (%)** | **Notes** |
|---|---|---|---|---|---|---|
| | 4 oz, 12 inch distance from IR source, top 2 heaters, gas setting at '2', 11 minutes drying, 175°F product temperature | 0.42 | 0.44 | 0.42 | 0.43 | Many of the leaves turned black |
| 1 | | | | | | |
| | 2 oz, 12 inch distance from IR source, top 1 heater only, '1.5' gas, 30 minutes drying, 135°F product temperature | 1.60 | 1.90 | 2.13 | 2.02 | Many of the leaves turned black |
| 2 | | | | | | |
| | 2 oz, 18 inch distance from IR source, top 1 heater only, '1.5' gas, 55 minutes drying, 124°F product temperature | 2.00 | 2.32 | 2.67 | 2.49 | Promising, some nonuniformity in drying |
| 3 | | | | | | |
| 4 | 3 oz, 18 inch distance from IR source, top 1 heater only, '1.5' gas, 2 hr 45 min drying, 109°F product temperature and mint leaves covered with a mesh screen | 1.86 | 2.17 | 2.47 | 2.32 | Promising |
| 5 | 6 hours @ 105-115°F | 2.03 | 2.43 | 2.80 | 2.62 | Promising |
| 6 | 3oz, 23 inch distance from IR source, top 1 heater, '1.5' gas, 106°F product temperature, 5 hr drying | 1.75 | 2.04 | 2.40 | 2.22 | Promising |
| 7 | 8 oz, 7 hrs in chamber | 1.67 | 1.83 | 2.22 | 2.03 | Many of the leaves black |

40lb of previously field (air) dried Black Mitcham variety peppermint was obtained from Essex Laboratories in Chehalis, Washington US. This mint variety is a commercial variety having a high mint oil content.

For IR treatment of the previously dried mint leaves, a smaller test unit was used. For each testing, 2 oz of previously field dried mint flakes sourced from Essex Laboratories (2015 harvest) was placed on a cookie tray and this tray was placed 30.48 cm (12 inches) away for the IR emitter at 800-900°F surface temperature at natural gas setting of '3.5'. Table 2 shows the test conditions and mint oil content in the IR treated mint leaf samples.

Compared to the control sample (Example 8) which did not go through any IR treatment, all IR treated samples showed reduction in their average mint oil content as well as reference mint oil components (Table 2) with the least reduction observed at the lowest temperature and shortest exposure time (Example 9). However, for the other conditions, both time and temperatures were modified, therefore, it is not possible to draw a clear conclusion on whether temperature or time or both equally had impact on the mint oil reduction at this point.

**Table 2. Mint oil contents of Infrared treated previously field dried mint leaf flakes (Essex Laboratories sourced Black Mitcham variety peppermint)**

| **Ex. #** | **Samples / IR Treatment Conditions** | **dl-Limonene/ Eucalyptol (%)** | **Menthone (%)** | **Menthol (%)** | **Average Mint Oil Content (% )** |
|---|---|---|---|---|---|
| 8 | Control (2015 harvest Essex dried mint flakes, no IR treatment) | 1.36 | 1.54 | 1.85 | 1.70 |
| 9 | 2 oz 30 sec - 185°F | 0.96 | 1.14 | 1.35 | 1.25 |
| 10 | 2 oz 60 sec - 220°F | 0.65 | 0.76 | 0.98 | 0.87 |
| 11 | 2 oz 90 sec - 210°F | 0.65 | 0.63 | 0.87 | 0.75 |
| 12 | 2 oz 2 min - 255°F | 0.45 | 0.37 | 0.55 | 0.46 |
| 13 | 2 oz 2.5 min - 266°F | 0.52 | 0.47 | 0.66 | 0.57 |
| 14 | 2 oz 3 min - 280°F | 0.53 | 0.46 | 0.62 | 0.54 |

There were not enough samples to conduct microbiological testing on the IR treated samples.

Chewing gum can be made by mixing the treated mint leaves into a gum batch prepared in a Sigma Blade mixer.

| TABLE 3 | | | |
|---|---|---|---|
| | Example 15 | Example 16 | Example 17 |
| Gum Base | 20.00 | 28.00 | 27.00 |
| Corn Syrup | 16.00 | 0 | 0 |
| Glycerin | 1.00 | 1.00 | 1.00 |
| Sugar | 61.00 | 68.00 | 66.00 |
| Mint Flavor | 1.00 | 1.00 | 1.00 |
| Treated mint leaves of Ex. 4 | 1.00 | 0 | 0 |
| Treated mint leaves of Ex. 6 | 0 | 2.00 | 0 |
| Treated mint leaves of Ex. 10 | 0 | 0 | 5.00 |
| Total | 100.00 | 100.00 | 100.00 |

| TABLE 4 | | | |
|---|---|---|---|
| | Example 15 | Example 16 | Example 17 |
| Gum Base | 24.00 | 24.00 | 24.00 |
| HSH Syrup | 8.00 | 8.00 | 8.00 |
| Glycerin | 1.00 | 1.00 | 1.00 |
| Sorbitol | 65.80 | 65.60 | 65.30 |
| Mint Flavor | 1.00 | 1.00 | 1.00 |
| Treated mint leaves of Ex. 5 | 0.20 | 0 | 0 |
| Treated mint leaves of Ex. 9 | 0 | 0.40 | 0 |
| Treated mint leaves of Ex. 14 | 0 | 0 | 0.70 |
| Total | 100.00 | 100.00 | 100.00 |

Unless otherwise specified, all percentages provided here are percent by weight of the identified product or component.

## Claims

1. A method of preparing a chewing gum or confectionery product comprising pieces of plant material comprising the steps of,
preparing fresh or dried plant material pieces of a desired size, wherein the plant material is a leaf,
irradiating the fresh or dried plant pieces with infrared radiation for a time and intensity sufficient to render it microbiologically stable while substantially preserving the color and flavor of the plant material, wherein the temperature of the irradiated plant material immediately after irradiation is 138°C (280°F) or less,
wherein when the plant material is fresh plant material, the time of irradiation is at least 20 minutes, and when the plant material is dried plant material, the time of irradiation is no more than 180 seconds,
preparing a chewing gum or confectionery product,
incorporating the irradiated plant material into the mass, or onto the surface, of the chewing gum or confectionery product.

2. The method of claim 1 wherein the fresh or dried plant material pieces are fresh plant material pieces.

3. The method of claim 2 wherein the time of irradiation is at least 30 minutes.

4. The method of claim 3 wherein the time of irradiation is at least 40 minutes, at least 50 minutes, or at least 60 minutes.

5. The method of any of claims 2 to 4 wherein the temperature of the irradiated plant material immediately after irradiation is 60°C (140°F) or less.

6. The method of claim 5 wherein the temperature of the irradiated plant material immediately after irradiation is 54°C (130°F) or less.

7. The method of claim 6 wherein the temperature of the irradiated plant material immediately after irradiation is 49°C (120°F) or less, 43°C (110°F) or less, or 38°C (100°F) or less.

8. The method of claim 1 wherein the fresh or dried plant material pieces are dried plant material pieces.

9. The method of claim 8 wherein the time of irradiation is no more than 150 seconds.

10. The method of claim 9 wherein the time of irradiation is no more than 120 seconds, no more than 90 seconds, or no more than 60 seconds.

11. The method of any of claims 1 to 4 or 8 to 10 wherein the temperature of the irradiated plant material immediately after irradiation is 121°C (250°F) or less, or 104°C (220°F) or less.

12. The method of claim 11 wherein the temperature of the irradiated plant material immediately after irradiation is 93°C (200°F) or less.

## Patentansprüche

1. Verfahren zur Herstellung eines Kaugummi oder eines Süßwarenprodukts, umfassend Stücke von Pflanzenmaterial, umfassend die folgenden Schritte,
Herstellen von frischen oder getrockneten Pflanzenmaterialstücken einer gewünschten Größe, wobei das Pflanzenmaterial ein Blatt ist,
Bestrahlen der frischen oder getrockneten Pflanzenstücke mit Infrarotstrahlung für eine Zeit und Intensität, die ausreichen, um sie mikrobiologisch stabil zu machen, während die Farbe und der Geschmack des Pflanzenmaterials im Wesentlichen erhalten bleiben, wobei die Temperatur des bestrahlten Pflanzenmaterials unmittelbar nach Bestrahlung 138 °C (280 °F) oder weniger ist,
wobei, wenn das Pflanzenmaterial frisches Pflanzenmaterial ist, die Zeit der Bestrahlung zumindest 20 Minuten ist, und wenn das Pflanzenmaterial getrocknetes Pflanzenmaterial ist, die Zeit der Bestrahlung nicht mehr als 180 Sekunden ist,
Herstellen eines Kaugummi oder eines Süßwarenprodukts,
Einarbeiten des bestrahlten Pflanzenmaterials in die Masse oder auf die Oberfläche des Kaugummi oder Süßwarenprodukts.

2. Verfahren nach Anspruch 1, wobei die frischen oder getrockneten Pflanzenmaterialstücke frische Pflanzenmaterialstücke sind.

3. Verfahren nach Anspruch 2, wobei die Zeit der Bestrahlung zumindest 30 Minuten ist.

4. Verfahren nach Anspruch 3, wobei die Zeit der Bestrahlung zumindest 40 Minuten, zumindest 50 Minuten oder zumindest 60 Minuten ist.

5. Verfahren nach einem der Ansprüche 2 bis 4, wobei die Temperatur des bestrahlten Pflanzenmaterials unmittelbar nach Bestrahlung 60 °C (140 °F) oder weniger ist.

6. Verfahren nach Anspruch 5, wobei die Temperatur des bestrahlten Pflanzenmaterials unmittelbar nach Bestrahlung 54 °C (130 °F) oder weniger ist.

7. Verfahren nach Anspruch 6, wobei die Temperatur des bestrahlten Pflanzenmaterials unmittelbar nach Bestrahlung 49 °C (120°F) oder weniger, 43 °C (110 °F) oder weniger oder 38 °C (100 °F) oder weniger ist.

8. Verfahren nach Anspruch 1, wobei die frischen oder getrockneten Pflanzenmaterialstücke getrocknete Pflanzenmaterialstücke sind.

9. Verfahren nach Anspruch 8, wobei die Zeit der Bestrahlung nicht mehr als 150 Sekunden ist.

10. Verfahren nach Anspruch 9, wobei die Zeit der Bestrahlung nicht mehr als 120 Sekunden, nicht mehr als 90 Sekunden oder nicht mehr als 60 Sekunden ist.

11. Verfahren nach einem der Ansprüche 1 bis 4 oder 8 bis 10, wobei die Temperatur des bestrahlten Pflanzenmaterials unmittelbar nach Bestrahlung 121 °C (250 °F) oder weniger oder 104 °C (220 °F) oder weniger ist.

12. Verfahren nach Anspruch 11, wobei die Temperatur des bestrahlten Pflanzenmaterials unmittelbar nach Bestrahlung 93 °C (200 °F) oder weniger ist.

## Revendications

1. Procédé de préparation d'un chewing-gum ou d'un produit de confiserie comprenant des morceaux de matière végétale comprenant les étapes de,
préparation de morceaux de matière végétale fraîche ou séchée d'une taille souhaitée, dans lequel la matière végétale est une feuille,
irradiation des morceaux végétaux frais ou séchés avec un rayonnement infrarouge pendant une durée et à une intensité suffisantes pour les rendre microbiologiquement stables tout en préservant sensiblement la couleur et la saveur de la matière végétale, dans lequel la température de la matière végétale irradiée immédiatement après l'irradiation est de 138° C (280° F) ou moins,
dans lequel lorsque la matière végétale est une matière végétale fraîche, le temps d'irradiation est d'au moins 20 minutes, et lorsque la matière végétale est une matière végétale séchée, le temps d'irradiation n'est pas supérieur à 180 secondes,
préparation d'un chewing-gum ou d'un produit de confiserie,
incorporation de la matière végétale irradiée dans la masse, ou sur la surface, du chewing-gum ou du produit de confiserie.

2. Procédé selon la revendication 1, dans lequel les morceaux de matière végétale fraîche ou séchée sont des morceaux de matière végétale fraîche.

3. Procédé selon la revendication 2, dans lequel le temps d'irradiation est d'au moins 30 minutes.

4. Procédé selon la revendication 3, dans lequel le temps d'irradiation est d'au moins 40 minutes, d'au moins 50 minutes ou d'au moins 60 minutes.

5. Procédé selon l'une quelconque des revendications 2 à 4, dans lequel la température de la matière végétale irradiée immédiatement après l'irradiation est de 60° C (140° F) ou moins.

6. Procédé selon la revendication 5, dans lequel la température de la matière végétale irradiée immédiatement après l'irradiation est de 54° C (130° F) ou moins.

7. Procédé selon la revendication 6, dans lequel la température de la matière végétale irradiée immédiatement après l'irradiation est de 49° C (120° F) ou moins, 43° C (110° F) ou moins, ou 38° C (100° F) ou moins.

8. Procédé selon la revendication 1, dans lequel les morceaux de matière végétale fraîche ou séchée sont des morceaux de matière végétale séchée.

9. Procédé selon la revendication 8, dans lequel le temps d'irradiation n'est pas supérieur à 150 secondes.

10. Procédé selon la revendication 9, dans lequel le temps d'irradiation n'est pas supérieur à 120 secondes, pas supérieur à 90 secondes ou pas supérieur à 60 secondes.

11. Procédé selon l'une quelconque des revendications 1 à 4 ou 8 à 10, dans lequel la température de la matière végétale irradiée immédiatement après l'irradiation est de 121° C (250° F) ou moins, ou 104° C (220° F) ou moins.

12. Procédé selon la revendication 11, dans lequel la température de la matière végétale irradiée immédiatement après l'irradiation est de 93° C (200° F) ou moins.
